# EUROPEAN PATENT SPECIFICATION

(11) **EP 3 645 407 B1**
(45) Date of publication and mention of the grant of the patent: **04.01.2023**
(21) Application number: 18720001.9
(22) Date of filing: 19.03.2018
(51) Int. Cl.: B65D 5/20, B65D 5/42, B65D 5/44

(54) **REUSABLE TRAY CONTAINER**
BEHÄLTER MIT WIEDERVERWENDBARER SCHALE
RÉCIPIENT DE TYPE BAC RÉUTILISABLE

(30) Priority: 29.06.2017 IT 201700072878 U
(43) Date of publication of application: 06.05.2020
(73) Proprietor: ONETRAY SPA, 20123 Milan (IT)
(72) Inventor: PEDOTE, Alessandro, 20123 Milan (IT); KLUZER, Federico, 20123 Milan (IT)
(74) Representative: Tarabbia, Luigi
(86) International application number: PCT/IB2018/051804
(87) International publication number: WO 2019/002953

(56) References cited:
- EP-A1- 1 728 733
- US-A- 3 086 691
- US-A- 3 338 469
- US-A- 3 863 830
- US-A- 4 787 515
- US-A1- 2004 118 741
- US-A1- 2004 182 859
- US-A1- 2017 073 106

## Description

### Technical field

The present invention relates to a container generally shaped as a tray and reusable several times, for example in logistics or object movement contexts, that may be the security check areas in airports or the chains of transport of products or semi-finished products along industrial production lines.

### Background art

As is known, in several professional or social contexts, there is the need to move one or more objects along a "forced" logistics and/or inspection line:
let us consider, for example, the X-ray scanning machines at airports,
which have suitable advancement rollers on which passengers' objects are made to transit.

Generally, in these contexts, the objects to be moved are collected in special containers that define a collection space always open on one side (in order to ensure a rapid loading and unloading of the container itself):
these containers are generally box-shaped or, still more commonly, they are trays or similar objects.

In this operating environment, despite the intrinsic simplicity of the containers-trays, there are still structural and functional aspects that can be improved: let us consider, for example, the cost-effectiveness of production combined with a great durability, a high recyclability of trays at their "end of life" and of the possibility of using these same objects also for other secondary purposes such as advertising or the attribution of univocal identification parameters of the objects loaded therein. Examples of containers are shown in US10370147B2. Document US3863830A discloses a reusable container according to the preamble of claim 1.

### Detailed description of the drawings

In comparison with the known art and the problems mentioned above, the object of the present invention is therefore to provide a usable tray container which has a greater and better functional utility both in terms of ease and cost-effectiveness of production and in terms of durability and also in terms of the possibility of adding one or more accessory functions to the mere containment of objects "in transit" along a given handling line. Described herein, by way of non-limiting example, is an embodiment of a reusable container - shaped for example as a tray - according to the invention, shown in the accompanying exemplary, however not limiting, figures, wherein:

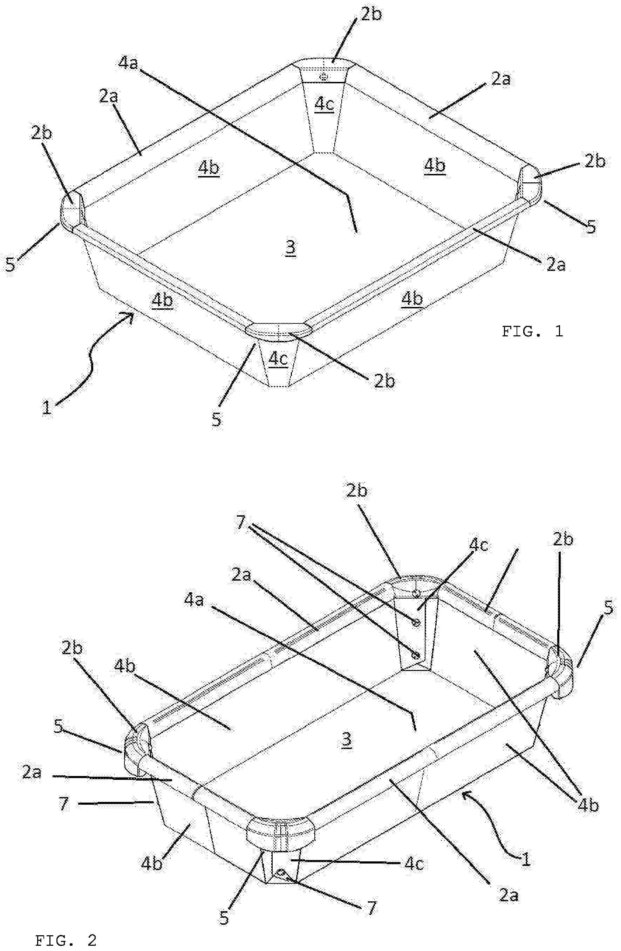

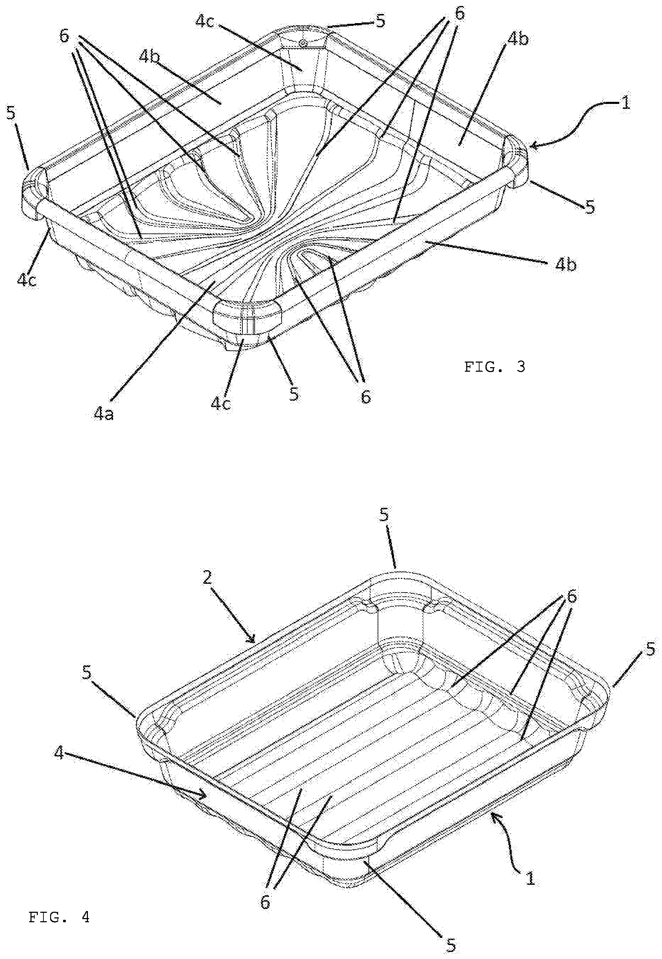

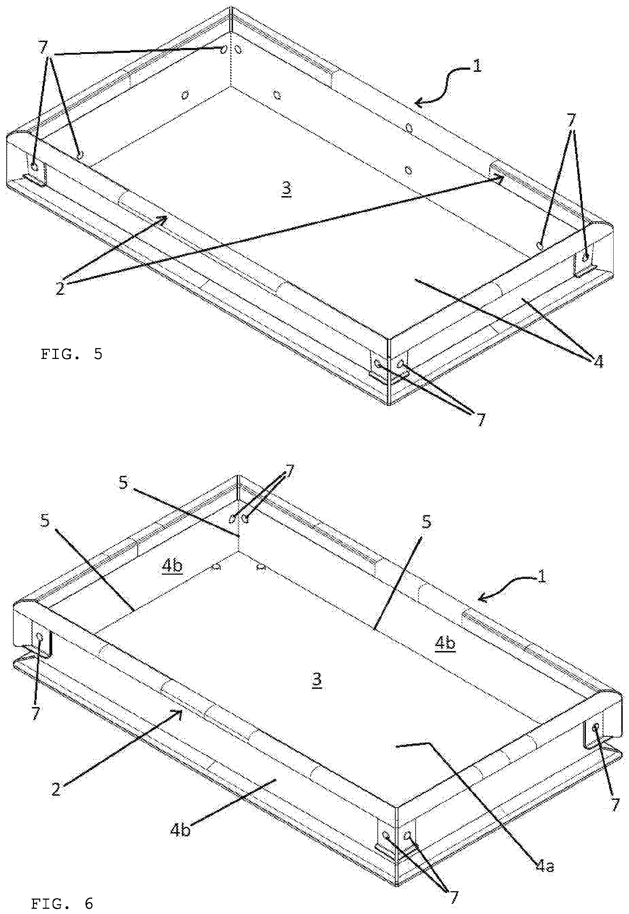

- Figures 1 to 6 show schematic views of different types of containers according to the present invention.

The reusable tray container according to the invention is globally indicated with the reference numeral 1 in the accompanying figures and, from the structural point of view, comprises a body 2 defining a three-dimensional structure: in turn, this three-dimensional structure defines a collection space 3 for a predetermined number of objects that can be positioned in the container 1 (this is therefore a semi-open space from the topological point of view).

Conveniently, the invention further comprises a removable layer 4 associated with the body 2 and cooperating with the latter in order to define the just mentioned collection space 3: the removability of the layer 4 with respect to the body 2 makes it therefore interchangeable and arbitrarily replaceable according to the needs of the moment (which in turn may be of a more disparate nature: for example, a more or less "smooth" removable layer can be provided to exert a stronger or less strong friction retaining on the objects placed in the collection space 3 or the surface visual/aesthetic appearance of the removable layer 4 can be changed according to advertising or information display requirements, or even a plurality of mutually superimposed removable layers 4 can be arranged to increase the load-bearing capacity or to prepare at least one of these layers to be thrown away after a particularly heavy or "polluting" use of the container 1).

From a structural point of view, the removable layer 4 comprises at least one configurable planar element, preferably reversibly or repeatably, between a flattening condition in which it has a substantially two-dimensional development and in which it is even more preferably separated from the body 2, and an operating condition in which it defines a three-dimensional volume open on at least one loading face and in which it is connected to the body 2 (this reversibility makes it possible to adopt different conformations and constitutions in terms of material for the removable layer 4, and also makes it possible to adopt different formulation methodologies to achieve the operational condition).

In a possible embodiment of the invention, the removable layer 4 comprises a predetermined number of programmed folding and/or deformation lines 5 adapted to change the geometrical configuration of the removable layer itself from the flattening condition to the operating condition: such programmed folding and/or deformation lines 5 are in turn adapted to define, in the operating condition of the removable layer 4, a bottom wall 4a, a predetermined number of side walls 4b perimetrically connected to the bottom wall and possibly also a predetermined number of perimeter corners 4c interposed between two adjacent side walls 4b of the container 1.

According to the three-dimensional conformation to be imparted to the container 1, the just mentioned perimeter corners 4c may be shaped according to three-dimensional prismatic portions, but it may also be the case that the perimeter corners 4c are shaped according to portions having one or more three-dimensional curvatures in space.

Returning to the concept of re-configurable planar element constituting the removable layer 4, it should be noted that the achievement and maintenance of its operating condition can conveniently be obtained by means of mechanical stabilization means 7 operating between different portions of the removable layer 4 (but also, if necessary, between the removable layer 4 and the body 2) to define precisely the operating condition itself.

The aforementioned mechanical stabilization means 7 may consist of hooking systems of the known type, such as clips or rivets or snap buttons, preferably made of radio-transparent material, in order to allow correct use in the X-ray inspection machines: these hooking systems are placed between different parts or layers of the removable layer, keeping the latter in the appropriate relative positions which globally define the aforementioned operating condition.

Alternatively, the stabilization means can also be implemented by means of localized shapings and/or folds and/or ultrasonic weldings interposed between adjacent parts or layers of the planar element constituting the removable layer 4.

In order to improve the geometric/structural coherence features, or in order to implement accessory functions (such as the partitioning of the collection space 3 or the establishment of barriers that oppose random and/or uncontrolled movements of the objects loaded into the container 1), the removable layer 4 may comprise suitable stiffening means 6 integrally obtained in the bottom wall 4a and/or in the side walls 4b and/or in the perimeter corners 4c: such stiffening means 6 may typically consist of folds and/or ribs formed integrally and seamlessly in delimited portions of the removable layer 4 itself.

Focusing now on the body 2, it can be observed that this includes:
- a predetermined number of elongated (for example, beam-shaped) elements 2a which define one or more corners of the bottom wall 4a and/or corners, preferably upper ones, of the side walls (4b);
- a predetermined number of angular elements 2b typically interposed between two (or more) elongated elements 2a which in turn are placed along adjacent perimeter sides of the container 1; and
- means for engaging the removable layer 4 in the elongated elements 2a and/or in the angular elements 2b (the latter means are for example constituted by insertion undercuts and/or recesses such as those shown in the figures).

For the purposes of the present invention, it should also be specified that the methods of interconnection between the beam-shaped elongated elements 2a and the angular elements 2b can be made with any type of mechanical contact of known type (for example, interlocking or snap or bayonet extensions and so on) and can also be of the reversible type, in such a way as to be able to guarantee an almost complete modularity of the body 2.

According to a further technical aspect of the invention, the angular elements 2b comprise gripping and handling means 5 (also shaped according to different geometries well known in the pertinent technical field) suitable for allowing a grip by a user of the container 1.

In terms of further additional features attributable to the invention, it is also possible to mention the presence of suitable means for univocal identification of the container 1 and/or of the objects placed in the container 1 (these means are typically constituted by RFID and/or NFC devices or in any case by assimilable technologies available in the state of the art) as well as of the presence of static or dynamic means of displaying messages and/or information reported on the surface of the removable layer 4 and/or on the body 2.

The constituent materials of the invention can be selected, as anticipated above, so as to respond to various technical requirements: for example, the body 2 can be made of polymer matrix composite materials, while the removable layer 4 can be made with a transparent PET film (but if desired, it is possible to imagine other materials, such as a polyurethane resin, which defines a certain value of sliding friction coefficient at the bottom of the collection space 3).

It can also be observed that the overall design of the shape and structure of the invention can take into account the possibility of stacking (vertically) a plurality of containers 1: the shapes defined cooperatively by the body and the removable layer will therefore be such as to allow an interpenetration between two overlapping containers.

The invention allows to obtain several advantages over the known art.

First of all, thanks to the peculiar constructive architecture of the container, and thanks to the particular possibility of choosing constitutive materials and geometric shapes that can be implemented, it is possible to obtain a high degree of operational flexibility in terms of capacity and type of objects to collect and transport, along with a high strength and ability to resist abrasions and manipulations, also those which are not particularly delicate or in any case fast and intrusive.

Moreover, the presence of the removable layer makes it possible to replace in a very short time and with a very low environmental impact the part of the container that is more subject to wear (or that can be changed for aesthetic reasons or for changing advertising messages), to the whole advantage of the aforementioned operational flexibility but also of the possibility of enriching the number of functions attributable to the same invention.

In greater detail, concerning advantages, it is possible to observe a greater dimensional flexibility, generated by the fact that the components by which the container 1 is constituted guarantee a flexibility of the product in dimensional terms, impossible with any other plastic moulding technique (considering, for example, that the body can be obtained by processing a "package" of material that does not require complex and expensive moulding equipment, and therefore is easily modifiable).

Likewise, the accessory components mounted on the body and designed for the auxiliary gripping/handling or stacking/storage functions are by their nature easily interchangeable with other components of different shapes.

The invention can also be easily decorated according to various known technologies, such as, for example, the application of a sublimation paper applied to the removable layer which, as already discussed several times in the present description, actually "covers" the body.

A remarkable lightness can also be counted among the advantages of the invention: the object weighs, on average, about half of any other product with the same intended use and with a comparable load volume having, in any case, a higher resistance to impact, abrasion and weightlifting.

It should also be noted that the structure of the present invention can be implemented with cheap materials and with quick and simple assembly operations, to the whole advantage of production and management savings.

It is finally evident that modifications or additions, which are obvious to a person skilled in the art, may be applied to the object of the present invention, without departing from the scope of protection provided by the appended claims.

## Claims

1. Reusable container for the collection and/or movement of objects, comprising a body (2) and at least one removable layer (4) said body (2) and said removable layer (4) mutually cooperating in order to define a three-dimensional structure, said three-dimensional structure comprising a collection space (3) for a predetermined number of objects which can be placed in the container (1), the removable layer 4 comprising in an operating condition, a bottom wall (4a), and a predetermined number of side walls (4b) perimetrically connected to the bottom wall,
**characterized in that** the body (2) further comprises:
- a predetermined number of elongated elements (2a) defining edges of the bottom wall (4a) and/or upper edges of the side walls (4b);
- a predetermined number of angular elements (2b) interposed between two of said elongated elements (2a) placed along adjacent perimeter sides of the container (1), said angular elements (2b) further comprising gripping and handling means (5) suitable for allowing a grip by a user of the container (1); and
- means for engaging the removable layer (4) in the elongated elements (2a) and/or in the angular elements (2b), said means for engaging comprising insertion undercuts and/or recesses.

2. Container according to claim 1, wherein said at least one removable layer (4) comprises at least one planar element which can be configured, reversibly or repeatably, between a flattening condition in which it has a substantially two-dimensional development and in which it is separated from the body (2), and the operating condition in which it defines a three-dimensional volume open on at least one loading face and in which it is connected to the body (2).

3. Container according to claim 2, wherein the removable layer (4) comprises a predetermined number of programmed folding and/or deformation lines (5) adapted to change the geometrical configuration of the removable layer (4) itself from the flattening condition to the operating condition

4. Container according to claim 3,
wherein said programmed folding and/or deformation lines (5) are adapted to define, in the operating condition of the removable layer (4):
- the bottom wall (4a) of the container (1);
- the predetermined number of side walls (4b) of the container (1) perimetrically connected to said bottom wall (4a); and
- a predetermined number of perimeter corners (4c) interposed between two adjacent side walls (4b) of the container (1).

5. Container according to claim 4, wherein said perimeter corners (4c) are shaped according to three-dimensional prismatic portions.

6. Container according to claim 4, wherein the perimeter corners (4c) are shaped according to portions having one or more three-dimensional curvatures in space.

7. Container according to any one of the preceding claims, wherein the removable layer (4) comprises stiffening means (6) integrally made in the bottom wall (4a) and/or in the side walls (4b) and/or in the perimeter corners (4c), said stiffening means (6) being constituted by folds and/or ribs formed integrally and seamlessly in delimited portions of the removable layer (4) itself.

8. Container according to any one of the preceding claims, wherein there are also mechanical stabilization means (7) operating between adjacent parts or layers of the removable layer (4) and/or operating between the removable layer (4) and the body (2) to define at least the operating condition of the removable layer (4) itself.

9. Container according to claim 8, wherein said mechanical stabilization means (7) comprise:
- hooking systems, comprising clips and/or rivets and/or snap buttons and preferably made preferably of radio-transparent material; and/or
- localized shapings and/or folds and/or ultrasonic weldings interposed between adjacent parts or layers of the planar element constituting the removable layer (4).

10. Container according to any one of the preceding claims, wherein the removable layer (2) comprises further gripping and handling means (5) suitable for allowing a grip by a user of the container (1).

11. Container according to claim 10, wherein also present are:
- means for univocal identification of the container (1) and/or of the objects placed in the container (1), said means being preferably constituted by RFID and/or NFC devices; and
- means for static or dynamic display of messages and/or information reported on the surface of the removable layer (4) and/or on the body (2).

## Patentansprüche

1. Wiederverwendbarer Behälter zum Sammeln und/oder Bewegen von Gegenständen, umfassend einen Körper (2) und mindestens eine abnehmbare Schicht (4), wobei der Körper (2) und die abnehmbare Schicht (4) zusammenwirken, um eine dreidimensionale Struktur zu definieren, wobei die dreidimensionale Struktur einen Sammelraum (3) für eine vorbestimmte Anzahl von Gegenständen umfasst, die in dem Behälter (1) platziert werden können, wobei die abnehmbare Schicht (4) in einem Betriebszustand eine Bodenwand (4a) und eine vorbestimmte Anzahl von Seitenwänden (4b) umfasst, die perimetrisch mit der Bodenwand verbunden sind,
**dadurch gekennzeichnet, dass** der Körper (2) ferner Folgendes umfasst:
- eine vorbestimmte Anzahl länglicher Elemente (2a), die die Kanten der Bodenwand (4a) und/oder die oberen Kanten der Seitenwände (4b) definieren;
- eine vorbestimmte Anzahl von winkelförmigen Elementen (2b), die zwischen zwei der länglichen Elemente (2a) angeordnet sind, die entlang benachbarter Umfangsseiten des Behälters (1) platziert sind, wobei die winkelförmigen Elemente (2b) ferner Greif- und Handhabungsmittel (5) umfassen, die geeignet sind, ein Greifen durch einen Benutzer des Behälters (1) zu ermöglichen; und
- Mittel zum Ineingriffbringen der abnehmbaren Schicht (4) in die länglichen Elemente (2a) und/oder in die winkelförmigen Elemente (2b), wobei die Mittel zum Ineingriffbringen Einschubhinterschneidungen und/oder Ausnehmungen umfassen.

2. Behälter nach Anspruch 1, wobei die mindestens eine abnehmbare Schicht (4) mindestens ein flächiges Element umfasst, das reversibel oder wiederholbar zwischen einem abgeflachten Zustand, in dem es eine im Wesentlichen zweidimensionale Abwicklung hat und in dem es von dem Körper (2) getrennt ist, und dem Betriebszustand, in dem es ein dreidimensionales, auf mindestens einer Beladungsseite offenes Volumen definiert und in dem es mit dem Körper (2) verbunden ist, konfiguriert werden kann.

3. Behälter nach Anspruch 2, wobei die abnehmbare Schicht (4) eine vorbestimmte Anzahl von programmierten Falt- und/oder Verformungslinien (5) umfasst, die dazu geeignet sind, die geometrische Konfiguration der abnehmbaren Schicht (4) selbst aus dem abgeflachten Zustand in den Betriebszustand zu ändern.

4. Behälter nach Anspruch 3, wobei die programmierten Falt- und/oder Verformungslinien (5) geeignet sind, im Betriebszustand der abnehmbaren Schicht (4) Folgendes zu definieren:
- die Bodenwand (4a) des Behälters (1);
- die vorbestimmte Anzahl von Seitenwänden (4b) des Behälters (1), die perimetrisch mit der Bodenwand (4a) verbunden sind; und
- eine vorbestimmte Anzahl von Umfangsecken (4c), die zwischen zwei benachbarten Seitenwänden (4b) des Behälters (1) angeordnet sind.

5. Behälter nach Anspruch 4, wobei die Umfangsecken (4c) entsprechend dreidimensionalen prismatischen Abschnitten geformt sind.

6. Behälter nach Anspruch 4, wobei die Umfangsecken (4c) entsprechend Abschnitten geformt sind, die eine oder mehrere dreidimensionale Krümmungen im Raum aufweisen.

7. Behälter nach einem der vorstehenden Ansprüche, wobei die abnehmbare Schicht (4) Versteifungsmittel (6) umfasst, die einstückig in der Bodenwand (4a) und/oder in den Seitenwänden (4b) und/oder in den Umfangsecken (4c) ausgebildet sind, wobei die Versteifungsmittel (6) aus Falten und/oder Rippen bestehen, die einstückig und nahtlos in begrenzten Abschnitten der abnehmbaren Schicht (4) selbst ausgebildet sind.

8. Behälter nach einem der vorstehenden Ansprüche, wobei auch mechanische Stabilisierungsmittel (7) vorhanden sind, die zwischen benachbarten Teilen oder Schichten der abnehmbaren Schicht (4) und/oder zwischen der abnehmbaren Schicht (4) und dem Körper (2) wirken, um mindestens den Betriebszustand der abnehmbaren Schicht (4) selbst zu definieren.

9. Behälter nach Anspruch 8, wobei die mechanischen Stabilisierungsmittel (7) Folgendes umfassen:
- Hakensysteme, die aus Klammern und/oder Nieten und/oder Druckknöpfen bestehen und vorzugsweise aus strahlendurchlässigem Material bestehen; und/oder
- lokalisierte Ausformungen und/oder Falten und/oder Ultraschallschweißungen, die zwischen benachbarten Teilen oder Schichten des die abnehmbare Schicht (4) bildenden flächigen Elements liegen.

10. Behälter nach einem der vorstehenden Ansprüche, wobei die abnehmbare Schicht (2) ferner Greif- und Handhabungsmittel (5) umfasst, die geeignet sind, ein Greifen durch einen Benutzer des Behälters (1) zu ermöglichen.

11. Behälter nach Anspruch 10, wobei auch vorhanden sind:
- Mittel zur eindeutigen Identifizierung des Behälters (1) und/oder der in dem Behälter (1) platzierten Gegenstände, wobei diese Mittel vorzugsweise aus RFID- und/oder NFC-Vorrichtungen bestehen; und
- Mittel zur statischen oder dynamischen Anzeige von Meldungen und/oder Informationen, die auf der Oberfläche der abnehmbaren Schicht (4) und/oder auf dem Körper (2) angezeigt werden.

## Revendications

1. Récipient réutilisable pour la collecte et/ou le déplacement d'objets, comprenant un corps (2) et au moins une couche amovible (4), ledit corps (2) et ladite couche amovible (4) coopérant mutuellement afin de définir une structure tridimensionnelle, ladite structure tridimensionnelle comprenant un espace de collecte (3) pour un nombre prédéterminé d'objets qui peuvent être placés dans le récipient (1), la couche amovible (4) comprenant, dans un état de fonctionnement, une paroi inférieure (4a) et un nombre prédéterminé de parois latérales (4b) reliées de manière périmétrique à la paroi inférieure,
**caractérisé en ce que** le corps (2) comprend en outre :
- un nombre prédéterminé d'éléments allongés (2a) définissant des bords de la paroi inférieure (4a) et/ou des bords supérieurs des parois latérales (4b) ;
- un nombre prédéterminé d'éléments angulaires (2b) interposés entre deux desdits éléments allongés (2a) placés le long de côtés périphériques adjacents du récipient (1), lesdits éléments angulaires (2b) comprenant en outre des moyens de préhension et de manipulation (5) adaptés pour permettre une prise du récipient (1) par un utilisateur ; et
- des moyens pour engager la couche amovible (4) dans les éléments allongés (2a) et/ou dans les éléments angulaires (2b), lesdits moyens d'engagement comprenant des contre-dépouilles d'insertion et/ou des évidements.

2. Récipient selon la revendication 1, dans lequel ladite au moins une couche amovible (4) comprend au moins un élément plan qui peut être configuré, de manière réversible ou répétable, entre un état d'aplatissement dans lequel il a un développement sensiblement bidimensionnel et dans lequel il est séparé du corps (2), et l'état de fonctionnement dans lequel il définit un volume tridimensionnel ouvert sur au moins une face de chargement et dans lequel il est relié au corps (2).

3. Récipient selon la revendication 2, dans lequel la couche amovible (4) comprend un nombre prédéterminé de lignes de pliage et/ou de déformation programmées (5) adaptées pour changer la configuration géométrique de la couche amovible (4) elle-même de l'état d'aplatissement à l'état de fonctionnement.

4. Récipient selon la revendication 3, dans lequel lesdites lignes de pliage et/ou de déformation programmées (5) sont adaptées pour définir, dans l'état de fonctionnement de la couche amovible (4) :
- la paroi inférieure (4a) du récipient (1) ;
- le nombre prédéterminé de parois latérales (4b) du récipient (1) reliées de manière périmétrique à ladite paroi inférieure (4a) ; et
- un nombre prédéterminé de coins du périmètre (4c) interposés entre deux parois latérales adjacentes (4b) du récipient (1).

5. Récipient selon la revendication 4, dans lequel lesdits coins du périmètre (4c) sont formés selon des parties prismatiques tridimensionnelles.

6. Récipient selon la revendication 4, dans lequel les coins du périmètre (4c) sont formés selon des parties ayant une ou plusieurs courbures tridimensionnelles dans l'espace.

7. Récipient selon l'une quelconque des revendications précédentes, dans lequel la couche amovible (4) comprend des moyens de raidissement (6) réalisés d'un seul tenant dans la paroi inférieure (4a) et/ou dans les parois latérales (4b) et/ou dans les coins du périmètre (4c), lesdits moyens de raidissement (6) étant constitués par des plis et/ou des nervures formés d'un seul tenant et sans soudure dans des parties délimitées de la couche amovible (4) elle-même.

8. Récipient selon l'une quelconque des revendications précédentes, dans lequel il existe également des moyens de stabilisation mécanique (7) fonctionnant entre des parties ou des couches adjacentes de la couche amovible (4) et/ou fonctionnant entre la couche amovible (4) et le corps (2) pour définir au moins l'état de fonctionnement de la couche amovible (4) elle-même.

9. Récipient selon la revendication 8, dans lequel lesdits moyens de stabilisation mécanique (7) comprennent :
- des systèmes d'accrochage, comprenant des clips et/ou des rivets et/ou des boutons-pression et réalisés de préférence en matériau radio-transparent ; et/ou
- des façonnages et/ou des plis et/ou des soudures par ultrasons localisés interposés entre des parties ou des couches adjacentes de l'élément plan constituant la couche amovible (4).

10. Récipient selon l'une quelconque des revendications précédentes, dans lequel la couche amovible (2) comprend en outre des moyens de préhension et de manipulation (5) adaptés pour permettre une prise du récipient (1) par un utilisateur.

11. Récipient selon la revendication 10, dans lequel sont également présents :
- des moyens d'identification univoque du récipient (1) et/ou des objets placés dans le récipient (1), lesdits moyens étant de préférence constitués par des dispositifs RFID et/ou NFC ; et
- des moyens d'affichage statique ou dynamique de messages et/ou d'informations reportés sur la surface de la couche amovible (4) et/ou sur le corps (2).
